(19) Europäisches Patentamt

European Patent Office

Office européen des brevets

(11) **EP 0 846 937 A2**

(12) **EUROPÄISCHE PATENTANMELDUNG**

(43) Veröffentlichungstag:
10.06.1998 Patentblatt 1998/24

(51) Int. Cl.$^6$: **G01F 1/74**

(21) Anmeldenummer: 97119191.1

(22) Anmeldetag: 03.11.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 03.12.1996 DE 19650112

(71) Anmelder:
WAGNER INTERNATIONAL AG
9450 Altstätten (CH)

(72) Erfinder:
• Adams, Horst, Dr.
88149 Nonnenhorn (DE)
• Seitz, Kurt
9443 Widnau (CH)

(74) Vertreter:
Liesegang, Roland, Dr.-Ing. et al
FORRESTER & BOEHMERT
Franz-Joseph-Strasse 38
80801 München (DE)

(54) **Einrichtung und Verfahren zum Messen der Pulvermasse in einem Pulver-Gas-Gemisch**

(57) Die Erfindung schlägt eine Einrichtung zum Messen der Pulvermasse in einem Pulver-Gas-Gemisch während der Förderung durch eine Förderleitung vor, mit einem Mikrowellenresonator , der einen Abschnitt der Förderleitung umgibt, und mit Mitteln zum Erfassen einer Änderung der Resonanzfrequenz und/oder der Mikrowellenamplitude des Mikrowellenresonators und zum Ableiten der Pulvermasse in dem Förderleitungsabschnitt aus der erfaßten Resonanzfrequenz und/oder der Mikrowellenamplitude, wobei der Mikrowellenresonator eine Spule aufweist, die außen auf die Förderleitung aufgebracht ist. Die Erfindung schlägt ferner ein entsprechendes Verfahren zum Messen der Pulvermasse vor, bei dem eine Bezugsresonanz bei einem bekannten Pulver-Massenstrom ermittelt wird, zwei Meßfrequenzen zu beiden Seiten der Bezugsresonanz eingestellt werden, für einen zu messenden Pulver-Massenstrom die Resonatorspannung bei den eingestellten Meßfrequenzen gemessen und deren Differenz gebildet wird, und aus der Spannungsdifferenz die Verschiebung der Resonanzfrequenz ermittelt wird.

Fig.1b

EP 0 846 937 A2

**Beschreibung**

Die Erfindung betrifft eine Einrichtung und ein Verfahren zum Messen der Pulvermasse in einem Pulver-Luft-Gemisch während der Förderung des Pulver-Luft-Gemisches durch eine Förderleitung gemäß dem Oberbegriff von Patentanspruch 1 bzw. von Patentanspruch 9. Eine solche Vorrichtung und ein derartiges Verfahren sind aus der DE-A-4 406 046 bekannt.

Zur Versorgung von Pulverbeschichtungsgeräten, beispielsweise in elektrostatischen Beschichtungsanlagen, mit Beschichtungspulver wird das Pulver fluidisiert, d.h. das Pulver wird mit einem Gas, vorzugsweise Luft, durchsetzt, um ein Pulver-Luft-Gemisch zu bilden, und dieses Pulver-Luft-Gemisch wird durch Förderleitungen den Beschichtungsgeräten zugeführt. Dabei kann es notwendig werden,die tatsächlich geförderte und ausgebrachte Pulvermenge pro Zeiteinheit, d.h. den Pulver-Massenstrom [g/min], während des Betriebes der Beschichtungsanlage zu ermitteln, um beispielsweise den Pulver-Massenstrom auf einen gewünschten Wert einzustellen oder um einen eingestellten Wert einhalten zu können.

Bei Pulverbeschichtungsanlagen nach dem Stand der Technik war es bisher üblich, die zur Pulverförderung mittels Injektoren oder Venturi-Düsen benötigten Luftdrücke mit Hilfe von Manometern in Bar zu messen oder die zur Förderung benötigten Luftmengen in $m^3/h$ zu bestimmen.

Sowohl die Messung der Luftdrücke als auch die der Luftmengen liefert jedoch nur einen indirekten und unzuverlässigen Hinweis auf die tatsächlich ausgebrachte Pulvermenge. Wenn beispielsweise ein Pulvervorratsbehälter leer ist, werden gleichwohl die Förderdrücke bzw. Luftmengen angezeigt werden, obwohl kein Pulver mehr ausgebracht werden kann.

In der genannten DE-A-4 406 046 wird vorgeschlagen, zur Bestimmung des Pulver-Massenstroms zwei Parameter zu messen, nämlich

- die Geschwindigkeit V des Pulver-Luft-Gemisches in der Förderleitung in m/sec und
- die Pulvermasse pro Volumeneinheit $M_V$ in der Förderleitung in $g/cm^3$.

Aus diesen beiden Parametern V und $M_V$ ergibt sich in Verbindung mit den als bekannt vorausgesetzten Abmessungen der Förderleitung, insbesondere mit dem Förderleitungsquerschnitt Q, der geförderte und ausgebrachte Pulver-Massenstrom, d.h. die Pulvermenge pro Zeiteinheit $M_T$ in g/min zu:

$$M_T \, [g/min] = V \, [m/sec] * M_V \, [g/cm^3] * Q \, [cm^2] * 6000$$

Gemäß dieser Druckschrift erfolgt die Messung der Geschwindigkeit mittels zweier mit Abstand zueinander angeordneter Meßelektroden, welche von dem geförderten Pulver-Gas-Gemisch erzeugte Ladungsschwankungen an der Förderleitung erfassen. Die Messung der Pulvermasse pro Volumeneinheit erfolgt mithilfe eines Mikrowellenresonators, welcher eine Änderung der Dielektrizitätskonstante und/oder der Mikrowellenabsorption in einem Resonanzvolumen der Förderleitung als eine Verschiebung der Resonanzfrequenz bzw. eine Änderung der Mikrowellenamplitude im Resonator erfaßt.

In der EP-A-297 309 sind ein Verfahren und eine Einrichtung zur Messung und Regelung der Pulvermenge in einer Pulverbeschichtungsanlage beschrieben, mit denen Pulvermengen gemessen werden können, welche pro Zeiteinheit einer Sprühbeschichtungseinrichtung zugeführt werden. Bei dem Verfahren wird die Dichte des Pulvers im Pulver-Gas-Strom von einer Strahlenmeßeinrichtung gemessen, die Gasmenge pro Zeiteinheit im Pulver-Gas-Strom wird ermittelt und die geförderte Pulvermenge pro Zeiteinheit wird aus der Gleichung c = a • b bestimmt.

In der US-A-4,807,480 wird ein Verfahren zum Messen der Durchflußrate eines Luft-Pulver-Gemisches beschrieben, bei dem die Geschwindigkeit des Pulver-Luft-Gemisches mithilfe von mit Abstand angeordneten Sensoren erfaßt wird, welche Ladungsschwankungen im Pulver-Luft-Gemisch erfassen. Hierzu wird von einer Korona-Nadel Ladung in das Pulver-Luft-Gemisch injiziert, welche dann von den Sensoren erfaßt wird,

In der JP-A-3-125924 ist ein Durchflußmesser für einen Pulverstrom offenbart, der einen Tracer-Stoff in einen Pulverstrom einbringt und zwei Sätze von Mikrowellen-Gebern und -Empfängern verwendet, um den Pulver-Massenstrom zu ermitteln.

Ferner ist in der DE-A-3 316 328 ein Hohlraumresonator für die Massenmessung eines Flüssigkeitsstromes beschrieben. Die Resonanz wird dabei in einem Mikrowellen-Hohlraum erzeugt, wobei Hohlraum-Moden entstehen. Die Mikrowellenenergie wird durch H-Felder ein- und ausgekoppelt. Der Resonator arbeitet in einem Frfequenzbereich von 1-20 GHz, wobei die geometrischen Abmessungen des Hohlraumes die Resonanzfrequenz bestimmen. Dadurch erhält man eine relativ große, unflexible Struktur. Zusätzlich hat der dort beschriebene Hohlraumresonator den Nachteil einer relativ großen Temperaturempfindlichkeit wegen der thermischen Ausdehnungskoeffizienten der für den Resonatorkörper verwendeten Metalle.

Aufgabe der Erfindung ist es, eine Einrichtung und ein Verfahren vorzusehen, mit denen in einer Pulverbeschichtungsanlage während des Betriebs der Anlage der geförderte Pulvermasse und somit die ausgebrachte Pulvermenge genauer und weniger störungsanfällig als beim Stand der Technik gemessen werden können.

Diese Aufgabe wird erfindungsgemäß durch eine Einrichtung mit den Merkmalen von Anspruch 1 und ein Verfahren mit den Merkmalen von Anspruch 9 gelöst.

Die Erfindung sieht eine Einrichtung zum Messen der Pulvermasse in einem Pulver-Gas-Gemisch während der Förderung des Pulver-Gas-Gemisches durch eine Förderleitung vor, welche die folgenden Merkmale aufweist: einen Mikrowellenresonator, der einen Abschnitt der Förderleitung umgibt, und Mittel zum Erfassen einer Änderung der Resonanzfrequenz und/oder der Mikrowellenamplitude des Mikrowellenresonators und zum Ableiten der Pulvermasse in dem Förderleitungsabschnitt aus der erfaßten Resonanzfrequenz und/oder der Mikrowellenamplitude, wobei der Mikrowellenresonator eine Spule aufweist, die außen auf die Förderleitung aufgebracht ist.

Gemäß eines ersten Aspekts der Erfindung ist der Mikrowellenresonator in Form einer Helix ausgebildet. Dabei handelt es sich im Prinzip um eine Spule, die außen auf die elektrisch nicht-leitende Förderleitung aufgebracht ist.

Diese Spule wird durch eine hochfrequente Wechselspannung (im Mikrowellenbereich) zur Resonanz gebracht. Der Vorteil der Resonanzmessung mit einem Helixresonator, gegenüber z. B. dem im Stand der Technik verwendeten Hohlraumresonator, liegt zunächst in der wesentlich geringeren Baugröße, die es ermöglicht, den Sensor direkt in die Sprühpistole einer Pulverbeschichtungsanlage zu integrieren. Ferner läßt sich mit einem Helixresonator eine besonders scharfe Resonanz erzeugen und somit eine bessere Güte erzielen. Durch die Zusammenwirkung dieser beiden Effekte ergibt sich eine größere Genauigkeit und Empfindlichkeit für die Messung der Pulverdichte bzw. der Pulvermasse pro Volumeneinheit.

Gemäß einer besonders vorteilhaften Ausführungsform der Erfindung ist die Spule des Helixresonators nicht einfach als Draht auf die Förderleitung gewickelt, sondern als Metallschicht auf die Förderleitung aufgedampft. Da beim Aufdampfen eines metallenen Dünnfilms eine Helix- oder Spulenstruktur mit sehr wenig Spulenmaterial erzeugt werden kann, ist selbst bei Verwendung von Gold als Spulenmaterial ein kostengünstiger Helixresonator realisierbar. Gold bietet unter den Edelmetallen die beste Korrosionsbeständigkeit, und es kann in Ätz- oder Maskentechniken sehr genau verarbeitet werden, so daß ein sehr präziser Helixresonator mit extrem hoher Güte erzeugt werden kann, was wiederum zu einer optimalen Meßempfindlichkeit führt.

Gemäß eines weiteren Aspekts der Erfindung wird ein Verfahren zum Messen der Pulvermasse in einem Pulver-Gas-Gemisch während der Förderung des Pulver-Gas-Gemisches durch eine Förderleitung vorgeschlagen, bei dem die Pulvermasse pro Volumeneinheit in einem Abschnitt der Förderleitung gemessen wird, indem eine Verschiebung der Resonanzfrequenz in einem an der Förderleitung angeordneten Mikrowellenresonator erfaßt wird, und bei dem bei der Messung der Pulvermasse pro Volumeneinheit eine Bezugs-Resonanzfrequenz $v_0$ für eine bekannte Bezugs-Pulvermasse ermittelt wird, zwei Meßfrequenzen $v_{m1}$, $v_{m2}$ zu beiden Seiten der Bezugs-Resonanzfrequenz eingestellt werden, für eine zu messende Pulvermassen die Resonatorspannungen bei den eingestellten Meßfrequenzen gemessen und deren Differenz gebildet wird und aus der Spannungsdifferenz die Verschiebung der Resonanzfrequenz relativ zu der Bezugs-Resonanzfrequenz ermittelt wird.

Weiterhin sieht die Erfindung ein System und ein Verfahren zum Messen eines Pulver-Massenstromes eines Pulver-Gas-Gemisches gemäß Anspruch 6 bzw. 9 sowie eine Beschichtungspistole gemäß Anspruch 17 vor.

Aus dem Stand der Technik, insbesondere der DE-A-4 406 046, war bekannt, die Verschiebung der Resonanzfrequenz als Maß für die Pulverdichte im Rohr auszuwerten. Wie dies ablaufen soll, ist dort nicht offenbart. Die vorliegende Erfindung schlägt daher ein spezielles Verfahren zum Messen der relativ zu einer Bezugs-Resonanz-Frequenzverschiebung vor. Der Vorteil dieses neuen Verfahrens liegt insbesondere darin, daß zu keiner Zeit eine absolute Frequenzmessung vorgenommen werden muß.

Im einzelnen wird für das erfindungsgemäße Verfahren eine Elektronik eingesetzt, die zunächst bei einer bekannten Bezugs-Pulvermasse, z. B. bei leerer Förderleitung, einen relativ breiten Frequenzbereich abtastet und eine Resonanz, d. h. eine Spannungsspitze, in diesem Bereich sucht. Wenn die Resonanz gefunden ist, mißt die Elektronik die Spannung $U_{max}$ im Maximum der Resonanz und setzt zwei Marken oder Meßfrequenzen symmetrisch zu diesem Maximum; bei einer speziellen Ausführungsform können diese Marken z. B. bei etwa der Hälfte $U_{1/2}$ der maximalen Amplitude der Resonanz, jeweils links und rechts vom Maximum gesetzt werden. Dabei spielt weder die absolute Frequenz $v_0$ der Resonanz noch die absolute Höhe $U_{max}$ des Spannungsmaximums eine Rolle. Wichtig ist, daß die Amplitudenwerte links und rechts vom Maximum gleich sind.

Ändert sich nun die Dielektrizitätskonstante im Resonator, z. B. durch Einbringen von Pulver in die Förderleitung, verschiebt sich die Resonanzkurve relativ zu den beiden vorher gesetzten Marken. Das heißt, der Amplitudenwert für die eine Frequenzmarke steigt an, der für die andere fällt ab. Eine Differenzmessung der beiden Spannungswerte wird ergeben, daß die Spannungsdifferenz bei der Bezugs-Pulvermasse null ist und bei jeder anderen Pulvermasse in einem weiten Bereich proportional zur Resonanzfrequenzverschiebung ist. Aus der Verschiebung der Resonanzfrequenz kann dann die Dichte des Pulver-Massenstroms, d.h. die Pulvermasse, in der Förderleitung auf dem Fachmann bekannte Art abgeleitet werden.

Neben der Tatsache, daß das neue Verfahren keine hochgenaue Messung der absoluten Frequenz erfordert, hat es noch den folgenden weiteren Vorteil. Bei Sprühpausen, also wenn kein Pulver in der Förderleitung ist und den Resonator durchströmt, kann ein automatischer Nullabgleich erfolgen, d. h. die Elektronik setzt die beiden Frequenzmarken neu symmetrisch zur der Maximalamplitude der Resonanz. Auf diese Weise können Frequenzverschiebungen durch Umwelteinflüsse, wie Temperatur und Feuchtigkeit, kompensiert werden.

Die erfindungsgemäße Einrichtung und das Verfahren können selbstverständlich kombiniert werden.

Die Erfindung ist im folgenden anhand bevorzugter Ausführungsformen mit Bezug auf die Zeichnung näher erläutert. Es zeigen:

| | |
|---|---|
| Fig. 1a und 1b | eine Gesamtansicht und eine schematische Teil-Schnittdarstellung einer Ausführungsform des erfindungsgemäßen Mikrowellenresonators, |
| Fig. 2a, 2b, 2c | Diagramme der von dem Mikrowellenresonator erzeugten Signale, |
| Fig. 3 | eine schematische Darstellung einer Elektronik zur Durchführung des erfindungsgemäßen Verfahrens, |
| Fig. 4 | eine schematische Darstellung der Geschwindigkeitsmeßvorrichtung des erfindungsgemäßen Systems und |
| Fig. 5 | ein Diagramm der von der Geschwindigkeitsmeßvorrichtung von Fig. 4 erfaßten Signale A und B über der Zeit. |

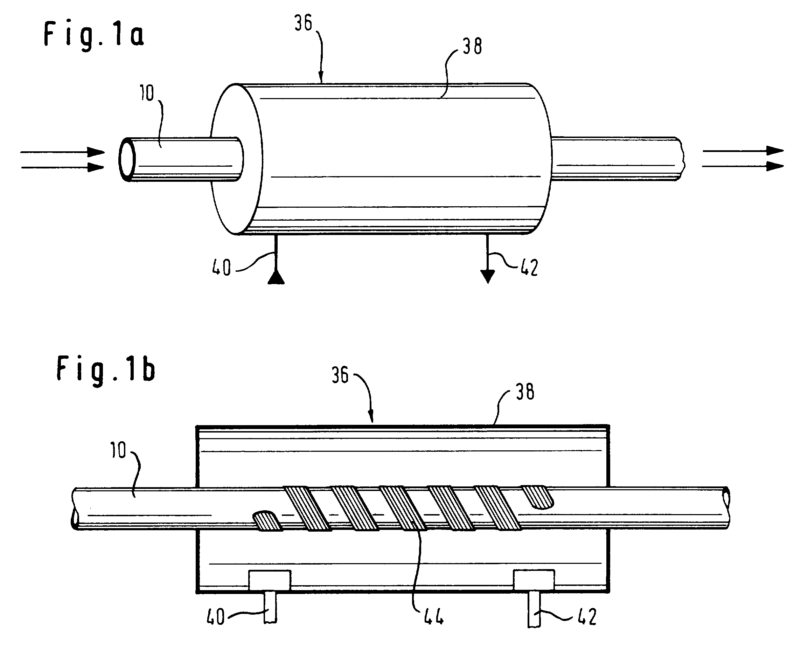

Fig. 1a und 1b zeigen eine Ausführungsform eines Mikrowellenresonators 36 der Massenmeßvorrichtung zur Bestimmung der Pulvermenge pro Volumeneinheit in einer Förderleitung 10.

Die Förderleitung 10 besteht aus einem Glas- oder Keramikrohr, sie kann jedoch auch ein Kunststoffschlauch sein oder eine andere für Beschichtungsanlagen geeignete Förderleitung. Die Förderleitung 10 ist elektrisch nicht-leitend. Sie wird von dem Pulver-Gas-Strom in Richtung der Pfeile in Fig. 1a durchströmt.

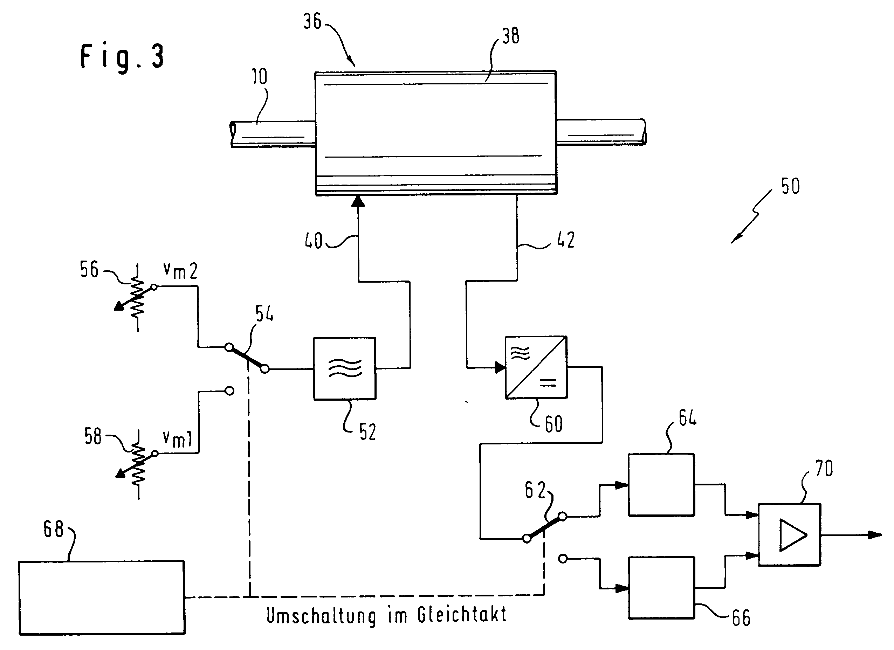

Der Resonator 36 weist für die Abschirmung gegen Störfelder einen Metallzylinder 38 auf, welcher den eigentlichen Resonatorteil 44 umgibt. An dem Metallzylinder 38 sind ein HF-Eingang 40 und ein HF-Ausgang 42 zur Einkopplung von Mikrowellen und zum Abnehmen der Resonatorspannung vorgesehen. Mit der HF-Einkopplungsstelle 40 und der HF-Auskopplungsstelle 42 können Koaxialkabel verbunden sein, s. Fig. 1b, um den Mikrowellenresonator mit einer Mikrowellenquelle und einem Spannungsaufnehmer zu verbinden, wie weiter unten mit Bezug auf Fig. 3 noch beschrieben ist.

Im Inneren des abschirmenden Metallzylinders 38 liegt der Resonator 44 in Form einer Helix oder Spule, welche um die Förderleitung 10 gewickelt ist. Der Mikrowellenresonator gemäß der Erfindung kann als um die Förderleitung 10 gewickelte Drahtspule 44 ausgebildet sein. Dieser Resonator hat einen sehr geringen Platzbedarf, so daß er direkt in das Sprühorgan, z. B. die Sprühpistole, einer Beschichtungsanlage integriert werden kann. Ferner läßt sich bei dem helixförmigen Resonator eine sehr genau abgegrenzte Resonanz und somit eine hohe Güte erzielen. Dadurch wird die Empfindlichkeit bei der Messung der Pulverdichte erhöht.

Gemäß einer besonders vorteilhaften Ausführungsform der Erfindung ist der Helixresonator als Dünnfilm-Metallschicht 44 auf die Förderleitung 10 aufgebracht, insbesondere aufgedampft. Mittels Ätz- oder Maskierungsverfahren wird die Helixform definiert. Als Spulenmaterial wird bevorzugt Gold verwendet, weil dieses sehr korrosionsbeständig ist und gut verarbeitet werden kann. Da bei dem Aufdampfen eines Dünnfilms nur wenig Material für die Helix 44 benötigt wird, kann selbst bei Verwendung von Gold als Spulenmaterial ein kostengünstiger Mikrowellenresonator realisiert werden. Die präzise Ausbildung der Helix aus dem Dünnfilm-Goldmaterial ermöglicht eine nochmalige Verbesserung der Spulengüte und eine Optimierung der Meßempfindlichkeit.

Die Grundsätze der Massenmessung mit dem Mikrowellenresonator 36 sind wie folgt:

Ein Teil des von dem Resonator erzeugten Mikrowellenfeldes dringt durch die Wand der Förderleitung 10 in das Pulver-Luft-Gemisch ein. Gemessen werden die Resonanzfrequenz $v_0$ des Resonators oder seine Güte Q. Diese Größen sind von folgenden Materialeigenschaften des Mediums im Resonanzbereich abhängig:

- die Dielektrizitätskonstante und
- die Absorption (Verlustfaktor).

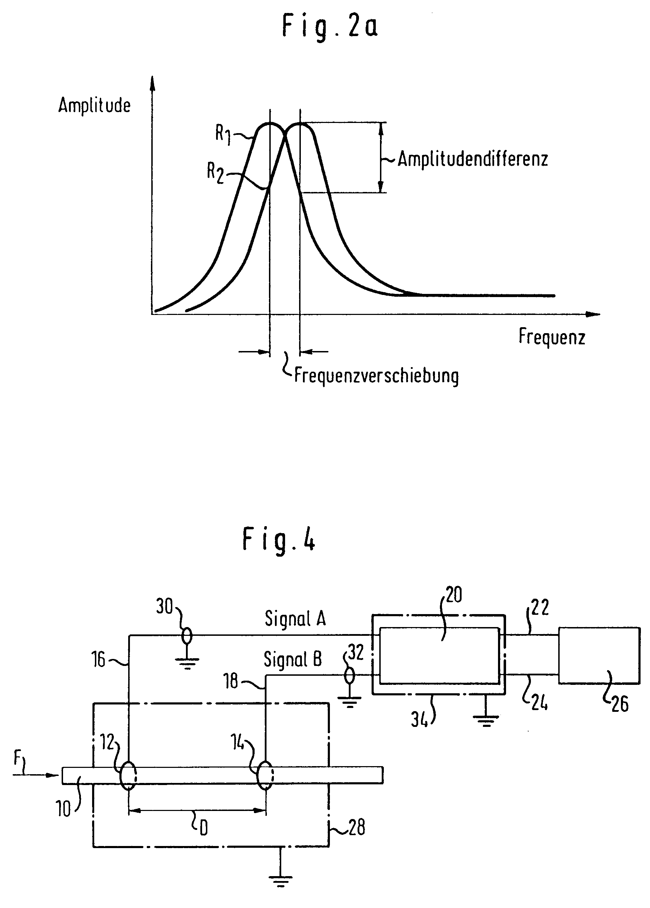

Die Änderungen der Dielektrizitätskonstante und der Absorption sind proportional zu Änderungen der Pulvermenge im Resonanzbereich oder Resonanzvolumen, welches einen bestimmbaren Abschnitt der Förderleitung 10 umfaßt. Daraus ergibt sich, daß eine Änderung der Pulvermenge, d.h. Pulvermasse, im Resonanzvolumen zu einer Verschiebung der Resonanzfrequenz und zu einer Veränderung der Güte und daher der Mikrowellenamplitude führt. In Fig. 2a sind zwei Resonanzkurven $R_1$, $R_2$ für unterschiedliche Pulvermengen im Resonanzvolumen gezeigt, wobei in Fig. 2a nur die Frequenzverschiebung zwischen den beiden Kurven $R_1$, $R_2$ gezeigt ist, nicht jedoch die Änderung der Mikrowellenamplitude aufgrund der veränderten Güte. Bei zunehmender Pulvermenge im Resonanzvolumen nimmt die Güte des Mikrowellenresonators ab, so daß die Kurve $R_2$ tatsächlich flacher verläuft als die Kurve $R_1$ und eine

geringere Amplitude aufweist.

Die Amplitudendifferenz ist in Fig. 2a eingezeichnet.

Durch Messen der Resonanzfrequenzverschiebung oder der Mikrowellenamplitudenänderung bei unterschiedlichen Pulvermengen im Resonanzvolumen ist jeweils die Bestimmung der Pulvermengenänderung im Resonanzvolumen als eine relative Massenbestimmung möglich. Eine absolute Massenbestimmung kann durch eine Kalibrierung des Mikrowellenresonators auf eine Bezugs-Resonanzfrequenz und eine Bezugs-Mikrowellenamplitude für eine vorgegebene bekannte Pulvermenge erfolgen. Aufgrund einer Resonanzfrequenzverschiebung oder einer Mikrowellenamplitudenänderung relativ zu der Bezugsfrequenz oder der Bezugsamplitude ist dann die Pulvermenge im Resonanzvolumen relativ zu der vorgegebenen bekannten Pulvermenge bestimmbar, so daß die absolute Pulvermasse pro Volumeneinheit aus der ermittelten Resonanzfrequenzverschiebung oder der Veränderung der Mikrowellenamplitude, bzw. Veränderung der Güte Q, relativ zu den Bezugsgrößen in geeigneten Auswertungsvorrichtungen ermittelt werden kann.

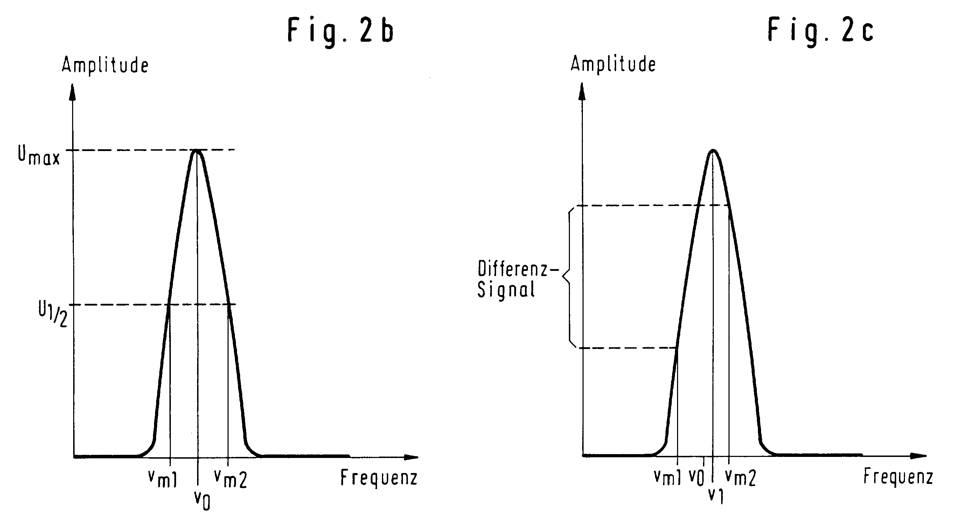

Das erfindungsgemäße Verfahren zum Messen der Pulvermasse und insbesondere der Resonanzfrequenzverschiebung ist im folgenden anhand der Figuren 2b und 2c näher erörtert.

Fig. 2b zeigt die Resonanzkurve des Helix-Mikrowellenresonators 36 von Fig. 1a und 1b, welche bei der Frequenz $v_0$ ein Spannungsmaximum $U_{max}$ hat, wobei im Fall von Fig. 2b die Förderleitung leer ist, d. h. die Pulvermasse ist null.

Bei dem erfindungsgemäßen Verfahren tastet eine Elektronik zunächst bei leerer Förderleitung einen voreingestellten, breiten Frequenzbereich ab und sucht eine Resonanz in diesem Bereich, d. h. eine Spannungsspitze. Wenn die Elektronik diese Resonanz oder Spannungsspitze gefunden hat, mißt sie die Spannung $U_{max}$ im Maximum, welche bei der Resonanzfrequenz $v_0$ auftritt. Sie setzt anschließend zwei Marken oder Meßfrequenzen zu beiden Seiten der Resonanzfrequenz $v_0$, z. B. $v_{m1}$ und $v_{m2}$. Diese Meßfrequenzen $v_{m1}$, $v_{m2}$ sind symmetrisch zu der Maximalamplitude angeordnet. Bei dem in Fig. 2b gezeigten Fall werden die Frequenzen bei etwa der Hälfte $U_{1/2}$ der maximalen Amplitude der Resonanz, jeweils links und rechts vom Maximum, eingestellt. Die Absolutfrequenz $v_0$ der Resonanzspannung sowie das absolute Spannungsmaximum $U_{max}$ der Resonanz (Signalamplitude) sind dabei nicht entscheidend; es muß lediglich darauf geachtet werden, daß die Amplitudenwerte links und rechts vom Maximum bei $v_{m1}$ bzw. $v_{m2}$ gleich sind. Das gewählte Beispiel der halben maximalen Resonanzamplitude zur Bestimmung der Meßfrequenzen $v_{m1}$ und $v_{m2}$ hat den Vorteil, daß bei diesen Meßstellen der Zusammenhang zwischen der Spannungsdiffernz und der Resonanzverschiebung annähernd linear ist; d.h. der Amplitudenwert für die eine Frequenzmarke $v_{m2}$ steigt an, der für die andere Frequenzmarke $v_{m1}$ fällt ab.

Wenn sich nun die Dielektrizitätskonstante im Mikrowellenresonator ändert, etwa durch Eindringen von Pulver in die Förderleitung, so verschiebt sich die Resonanzfrequenz relativ zu der Bezugs-Resonanzfrequenz, z. B. auf $v_1$ wie in Fig. 2c. Die Elektronik erfaßt nun die Spannungsamplituden der neuen Resonatorspannung bei den Meßfrequenzen $v_{m1}$ und $v_{m2}$, wobei sich, wie in Fig. 2c dargestellt, eine erhebliche Spannungsdifferenz zwischen den beiden Meßfrequenzen ergibt; d. h. der Amplitudenwert für die eine Frequenzmarke $v_{m2}$ steigt an, der für die andere Frequenzmarke $v_{m1}$ fällt ab.

Eine Differenzmessung der Spannungswerte bei den Meßfrequenzen $v_{m1}$, $v_{m2}$ ergibt bei leerer Förderleitung bzw. bei der Bezugs-Pulvermasse die Spannungsdifferenz null, während die Spannungsdifferenz für alle anderen Pulvermassen in einem weiten Frequenzbereich proportional zur Resonanzfrequenzverschiebung ist. Aus der Resonanzfrequenzverschiebung kann, wie oben erörtert, die Pulverdichte in der Förderleitung ermittelt werden.

Eine elektronische Schaltung, oder Elektronik, zum Durchführen der erfindungsgemäßen Messung der Pulvermasse allgemein mit 50 bezeichnet. Der HF-Eingang 40 des Mikrowellenresonators 36 ist mit einem einstellbaren HF-Oszillator 52 gekoppelt, der über einen Schalter 54 zwischen der oberen Meßfrequenz $v_{m2}$ und der unteren Meßfrequenz $v_{m1}$ umstellbar ist. Diese Frequenzen $v_{m2}$, $v_{m1}$ sind über Potentiometer 56 bzw. 58 einstellbar. Sie werden, wie oben erörtert, vorab ausgehend von der Bezugs-Pulvermasse bestimmt. Der HF-Oszillator 52 kann somit den Mikrowellenresonator 36, der von der gesuchten Pulvermasse durchströmt wird, jeweils mit einer der beiden eingestellten Meßfrequenzen anregen.

Bei Anregung des Mikrowellenoszillators 36 mit den Meßfrequenzen $v_{m1}$, $v_{m2}$ entstehen am HF-Ausgang 42 entsprechende Resonatorspannungen, welche einem Gleichrichter 60 zugeführt werden. Diese Spannungen werden über einen Schalter 62 wahlweise einem Speicher 64 für die höhere Meßfrequenz $v_{m2}$ und einem Speicher 66 für die niedrigere Meßfrequenz $v_{m1}$ zugeführt. Der Schalter 54 und der Schalter 62 werden von einem Taktgeber 68 im Gleichtakt umgeschaltet, so daß bei Anregung des Mikrowellenresonators 36 mit der niedrigeren Meßfrequenz $v_{m1}$ die Ausgangsspannung des Resonators 36 dem "unteren" Speicher 66 zugeführt wird und bei Anregung des Mikrowellenresonators 36 mit der höheren Meßfrequenz $v_{m2}$ die Ausgangsspannung des Resonators 36 dem "oberen" Speicher 64 zugeführt wird. Die gespeicherten Spannungswerte werden einem Differenzverstärker 70 zugeführt, dessen Ausgangssignal zur weiteren Verarbeitung gemäß dem oben beschriebenen Verfahren an eine nicht gezeigte Verarbeitungseinheit weitergeleitet wird, um aus der Spannungsdifferenz die Verschiebung der Resonanzfrequenz des Mikrowellenresonators 36 relativ zu der Bezugs-Resonanz und daraus die Pulverdichte in dem Meßabschnitt der Förderleitung 10 zu ermitteln.

Das erfindungsgemäße Verfahren hat den großen Vorteil, daß keine hochgenaue Messung der absoluten Resonanzfrequenzen einer bekannten Bezugs-Pulvermasse und einer gesuchten Pulvermasse durchgeführt werden müssen. Ferner kann in Sprühpausen, also wenn kein Pulver in der Förderleitung und somit im Resonator ist, ein automatischer Nullabgleich erfolgen; d. h. die Elektronik stellt die beiden Meßfrequenzen wieder symmetrisch zu der Maximalamplitude der Resonanz ein. Auf diese Weise können Frequenzverschiebungen durch Umwelteinflüsse, wie Temperatur- und Feuchtigkeitsänderungen, kompensiert werden. Das Verfahren wird vorzugsweise mit dem oben beschriebenen Helixresonator durchgeführt.

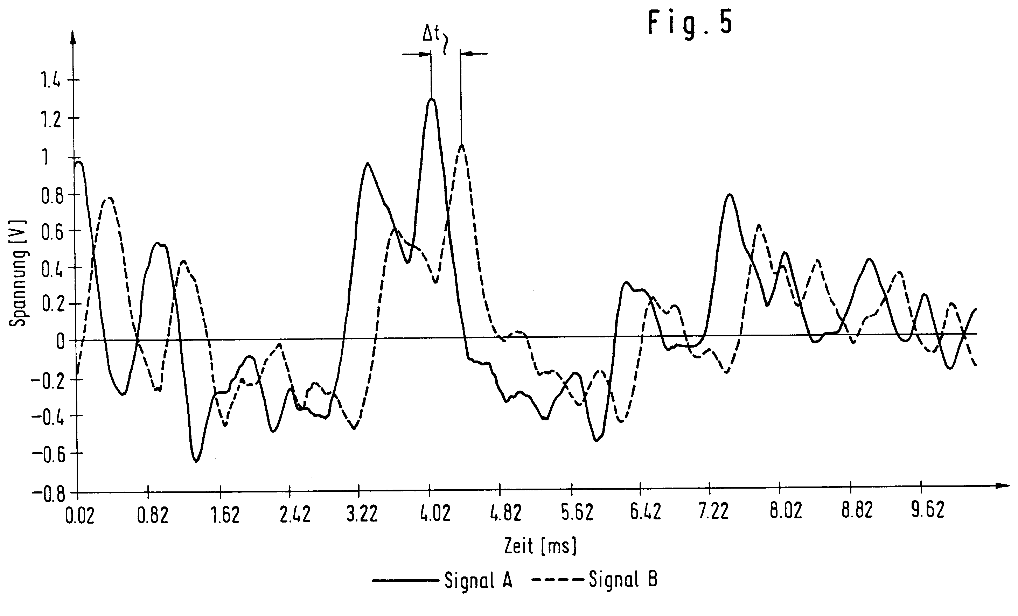

Fig. 4 zeigt schematisch den Aufbau der Geschwindigkeitsmeßvorrichtung. An der Förderleitung 10 sind mit einem vorgegebenen Abstand D zwei Meßelektroden 12, 14 angebracht, welche über Signalleitungen 16, 18 mit einem Verstärker 20 verbunden sind. Die Ausgänge 22, 24 des Verstärkers 20 sind mit einer Meßwert-Auswertungsvorrichtung 26, beispielsweise einem X(t)-Schreiber, verbunden. Bei der in Fig. 4 gezeigten Ausführungsform der Geschwindigkeitsmeßvorrichtung bestehen die Meßelektroden 12, 14 aus Kupferringen, welche um die Förderleitung 10 herumgelegt sind.

Der Abschnitt der Förderleitung 10, bei dem die Meßanordnung mit den Meßelektroden 12, 14 angeordnet ist, ist von einer geerdeten Abschirmung 28 umgeben. Auch die Signalleitungen 16, 18 und der Verstärker 20 weisen geerdete Abschirmungen 30, 32 bzw. 34 auf. Der Verstärker 20 der gezeigten Ausführungsform ist ein empfindlicher Meßverstärker.

Die Geschwindigkeitsmeßvorrichtung arbeitet wie folgt:

Die Pulverpartikel des durch die Förderleitung 10 in der Richtung des Pfeiles F transportierten Pulver-Luft-Gemisches laden sich durch Reibung mit dem Kunststoff-Schlauchmaterial elektrostatisch auf. Diese Ladungen influenzieren, oder induzieren, in den beiden in geeignetem Abstand D zueinander angeordneten, an dem Kunststoffschlauch angebrachten Meßelektroden 12, 14 Spannungen, welche über die abgeschirmten Signalleitungen 16, 18 dem empfindlichen Meßverstärker 20 zugeführt werden. Der Verstärker mißt und verstärkt die durch die geladenen Pulverpartikel an den Orten der beiden Elektroden erzeugten Influenzspannungen. Die gemessenen Signale, Signal A von Meßelektrode 12 und Signal B von Meßelektrode 14, sind in Fig. 5 dargestellt. Der zeitliche Verlauf der beiden Signale stimmt weitgehend, zu etwa 97%, überein (Korrelation). Die verstärkten Signale A, B werden von dem Verstärker 20 an die Meßwert-Auswertungsvorrichtung 26 übergeben, welche die zeitlichen Signalverläufe auf dem X(t)-Schreiber anzeigt und auswertet. Da die Signalverläufe weitgehend übereinstimmen, ist die eindeutige Bestimmung der Zeitspannen zwischen zwei entsprechenden Signalspitzen möglich, so daß aus der Zeitverschiebung oder dem zeitlichen Versatz $\Delta t$ zwischen den Signalspitzen und dem bekannten Abstand D zwischen die Meßelektroden die Geschwindigkeit V der Pulverpartikel in dem durch die Förderleitung 10 transportierten Pulver-Luft-Gemisch berechenbar ist: $V = D/\Delta t$.

Bei einer modifizierten Ausführungsform der Meßvorrichtung wird die Luft zur Förderung der Pulverpartikel pulsiert, so daß die beiden Meßelektroden an dem Kunststoffschlauch pulsierende Influenzspannungen erfassen. Dadurch ergeben sich anstelle der in Fig. 5 gezeigten weitgehend zufälligen Spannungsschwankungen im wesentlichen periodische Signalverläufe nach Maßgabe der Impulsfrequenz, welchen lediglich ein geringer Rauschanteil überlagert ist. Aus der Zeitspanne zwischen zwei korrespondierenden Signalspitzen und dem bekannten Abstand D zwischen den Meßelektroden 12, 14 kann dann die Geschwindigkeit V der Pulverpartikel, wie oben beschrieben, bestimmt werden. Der Vorteil dieser modifizierten Ausführungsform der Meßvorrichtung und des Meßverfahrens liegt darin, daß der Meßverstärker 20 schmalbandig auf die Modulationsfrequenz abgestimmt werden kann, so daß eine Verbesserung des Signal/Rausch-Verhältnisses erreicht wird.

Bei einer weiteren Ausführungsvariante kann der Nachweis der pulsierenden Ladungen mit Hilfe eines Lock-in Verstärkers zusätzlich phasenempfindlich erfolgen. Die Signale werden dann einerseits frequenzselektiv, schmalbandig auf die Modulationsfrequenz abgestimmt verstärkt, wobei der Lock-in Verstärker andererseits auf eine feste Phase relativ zu dem Anregungsimpuls eingestellt, oder "eingerastet", werden kann, wobei diese feste Phase aufgrund der bekannten Abmessungen und der Dimensionierung des Geschwindigkeitsmeßsystemes bestimmbar ist. Dadurch wird eine weitere Verbesserung des Signal/Rausch-Verhältnisses erreicht.

Aus der gemessenen Geschwindigkeit des Pulver-Luft-Gemisches V, der gemessenen Pulvermasse pro Volumeneinheit $M_V$ und dem Querschnitt Q der Förderleitung 10 kann dann in einer nicht gezeigten Rechenvorrichtung durch Multiplikation der Pulver-Massenstrom in der Förderleitung, d.h. die pro Zeiteinheit geförderte Pulvermenge, berechnet werden.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

**Patentansprüche**

1. Einrichtung zum Messen der Pulvermasse in einem Pulver-Gas-Gemisch während der Förderung des Pulver-Gas-Gemisches durch eine Förderleitung (10), mit

   einem Mikrowellenresonator (36), der einen Abschnitt der Förderleitung umgibt, und mit

   Mitteln (50) zum Erfassen einer Änderung der Resonanzfrequenz und/oder der Mikrowellenamplitude des Mikrowellenresonators (36) und zum Ableiten der Pulvermasse in dem Förderleitungsabschnitt aus der erfaßten Resonanzfrequenz und/oder der Mikrowellenamplitude,

   dadurch **gekennzeichnet**, daß der Mikrowellenresonator (36) eine Spule (44) aufweist, die außen auf die Förderleitung (10) aufgebracht ist.

2. Einrichtung nach Anspruch 1, dadurch **gekennzeichnet**, daß die Spule (44) als Dünnfilm-Helix auf die Förderleitung (10) aufgebracht ist.

3. Einrichtung nach Anspruch 2, dadurch **gekennzeichnet**, daß die Dünnfilm-Helix (44) aus einer aufgedampften Edelmetallschicht, insbesondere aus Gold, hergestellt ist.

4. Einrichtung nach Anspruch 1, dadurch **gekennzeichnet**, daß die Spule eine auf die Förderleitung (10) gewickelte Drahtspule (44) ist.

5. Einrichtung nach einem der vorangehenden Ansprüche, **gekennzeichnet** durch eine Elektronik (50) zum Erfassen und Speichern einer Bezugs-Resonanzfrequenz $v_0$ für eine bekannte Bezugs-Pulvermasse, zum Einstellen von zwei Meßfrequenzen $v_{m1}$, $v_{m2}$ zu beiden Seiten dieser Bezugs-Resonanzfrequenz und zum Erfassen und Vergleichen der Resonatorspannungen bei den eingestellten Meßfrequenzen für eine zu messende Pulvermasse, um aus der Spannungsdifferenz die Pulvermasse pro Volumeneinheit abzuleiten.

6. System zum Messen eines Pulver-Massenstroms eines Pulver-Gas-Gemisches mit einer Einrichtung zum Messen der Pulvermasse nach einem der vorangehenden Ansprüche und mit

   einer Geschwindigkeitsmeßvorrichtung (12-26) zum Messen der Geschwindigkeit des Pulver-Gas-Gemisches in der Förderleitung (10) und

   einer Rechenvorrichtung zum Berechnen des Pulver-Massenstromes aus der gemessenen Geschwindigkeit, der gemessenen Pulvermasse pro Volumeneinheit und den Abmessungen der Förderleitung (10).

7. System nach Anspruch 6, durch **gekennzeichnet**, daß die Geschwindigkeitsmeßvorrichtung zwei mit Abstand zueinander an der Förderleitung (10) vorgesehene Meßelektroden (12, 14) aufweist, die von dem geförderten Pulver-Gas-Gemisch erzeugten Ladungsschwankungen an der Förderleitung (10) erfassen und aus den erfaßten Ladungsschwankungen die Geschwindigkeit des Pulver-Gas-Gemisches ermitteln.

8. System nach Anspruch 7, dadurch **gekennzeichnet**, daß die Meßelektroden die Förderleitung (10) umgebende Ringelektroden (12, 14) sind und daß die Meßwertverarbeitungsvorrichtung einen Meßverstärker (20) zum Verstärken der Spannungssignale und eine Auswertungsvorrichtung (26) aufweist, welche den zeitlichen Versatz zwischen Extremwerten der verstärkten Spannungssignale erfaßt.

9. Verfahren zum Messen der Pulvermasse in einem Pulver-Gas-Gemisch während der Förderung des Pulver-Gas-Gemisches durch eine Förderleitung (10), bei dem die Pulvermasse pro Volumeneinheit in einem Abschnitt der Förderleitung (10) gemessen wird, indem eine Verschiebung der Resonanzfrequenz in einem an der Förderleitung angeordneten Mikrowellenresonator (36) erfaßt wird, dadurch **gekennzeichnet**, daß bei der Messung der Pulvermasse pro Volumeneinheit eine Bezugs-Resonanzfrequenz $v_0$ für eine bekannte Bezugs-Pulvermasse ermittelt wird, zwei Meßfrequenzen $v_{m1}$, $v_{m2}$ zu beiden Seiten der Bezugs-Resonanzfrequenz eingestellt werden, für eine zu messende Pulvermassen die Resonatorspannungen bei den eingestellten Meßfrequenzen gemessen und deren Differenz gebildet wird und aus der Spannungsdifferenz die Verschiebung der Resonanzfrequenz relativ zu der Bezugs-Resonanzfrequenz ermittelt wird.

10. Verfahren nach Anspruch 9, dadurch **gekennzeichnet**, daß die Bezugs-Resonanzfrequenz bei leerer Förderleitung (10) ermittelt wird.

11. Verfahren nach Anspruch 9 oder 10, dadurch **gekennzeichnet**, daß zum Ermitteln der Bezugs-Resonanzfrequenz für die bekannnte Pulvermasse die maximale Spannungsamplitude $U_{max}$ des Resonators (36) erfaßt wird und daß die Meßfrequenzen bei einem vorgegebenen Bruchteil $U_{1/2}$ der maximalen Amplitude eingestellt werden.

**12.** Verfahren nach Anspruch 11, dadurch **gekennzeichnet**, daß die Meßfrequenzen etwa bei der halben maximalen Spannungsamplitude eingestellt werden.

**13.** Verfahren zum Messen eines Pulver-Massenstromes eines Pulver-Gas-Gemisches, bei dem die Pulvermasse gemäß dem Verfahren nach einem der Ansprüche 9 bis 12 gemessen wird, die Geschwindigkeit des Pulver-Gas-Gemisches in der Förderleitung (10) gemessen wird, und aus der gemessenen Geschwindigkeit, der gemessenen Pulvermasse pro Volumeneinheit und vorbekannten Abmessungen der Förderleitung (10) der Pulver-Massenstrom berechnet wird.

**14.** Verfahren nach Anspruch 13, dadurch **gekennzeichnet**, daß bei der Geschwindigkeitsmessung an zwei voneinander entfernten Meßstellen (12, 14) von dem geförderten Pulver-Gas-Gemisch an der Oberfläche der Förderleitung (10) erzeugte Ladungsschwankungen erfaßt werden, die erfaßten Ladungsschwankungen in Spannungssignale umgewandelt werden und die Geschwindigkeit des Pulver-Gas-Gemisches aus dem zeitlichen Versatz zwischen diesen Spannungssignalen und dem Abstand der Meßstellen ermittelt wird.

**15.** Verfahren nach Anspruch 14, dadurch **gekennzeichnet**, daß das Pulver-Gas-Gemisch pulsierend durch die Förderleitung (10) gefördert wird, um erfaßbare Ladungsschwankungs-Maxima und -Minima zu erzeugen.

**16.** Verfahren nach Anspruch 14 oder 15, dadurch **gekennzeichnet**, daß der Pulver-Massenstrom ($M_T$) als Produkt der gemessenen Geschwindigkeit (V), der gemessenen Pulvermasse pro Volumeneinheit ($M_V$) und des Querschnitts (Q) der Förderleitung berechnet wird:

$$M_T = V * M_V * Q.$$

**17.** Beschichtungspistole mit einer Förderleitung zum Transportieren eines Pulver-Gas-Gemisches und mit einer Einrichtung zum Messen eines Pulver-Massenstromes nach einem der Ansprüche 6 bis 8, dadurch **gekennzeichnet**, daß die Einrichtung in die Beschichtungspistole integriert ist.

Fig.1a

Fig.1b

EP 0 846 937 A2

# Fig. 2a

# Fig. 4

Fig. 2b

Fig. 2c

EP 0 846 937 A2

Fig. 3

Umschaltung im Gleichtakt

vm2

vm1

# Fig. 5

EP 0 846 937 A2